# EUROPÄISCHE PATENTSCHRIFT

(11) **EP 2 044 337 B1**
(45) Veröffentlichungstag und Bekanntmachung des Hinweises auf die Patenterteilung: **04.06.2014**
(21) Anmeldenummer: 07787024.4
(22) Anmeldetag: 03.07.2007
(51) Int. Cl.: F15B 21/08, F15B 11/042

(54) **ELEKTROHYDRAULISCHES REGELSYSTEM ZUR BETÄTIGUNG VON EINEM AKTUATOR IN EINEM KRAFTFAHRZEUG**
ELECTROHYDRAULIC CONTROL SYSTEM FOR THE ACTUATION OF AN ACTUATOR IN A MOTOR VEHICLE
SYSTEME DE REGULATION ELECTROHYDRAULIQUE POUR L'ACTIONNEMENT D'UN ACTIONNEUR DANS UN VEHICULE AUTOMOBILE

(30) Priorität: 12.07.2006 DE 102006032516; 04.12.2006 DE 102006057361; 30.01.2007 DE 102007004494
(43) Veröffentlichungstag der Anmeldung: 08.04.2009
(73) Patentinhaber: Continental Teves AG & Co. OHG, 60488 Frankfurt (DE)
(72) Erfinder: BEER, Wilhelm, 65428 Rüsselsheim (DE)
(86) Internationale Anmeldenummer: PCT/EP2007/056701
(87) Internationale Veröffentlichungsnummer: WO 2008/006742

(56) Entgegenhaltungen:
- WO-A-00/46089
- WO-A-2006/100286
- DE-A1- 19 709 740
- US-A1- 2005 088 039

## Beschreibung

Die Erfindung betrifft ein elektrohydraulisches Regelsystem zur Betätigung von wenigstens einem Aktuator in einem Kraftfahrzeug nach dem Oberbegriff des Patentanspruchs 1.

Derartige Systeme verfügen über ein elektrohydraulisches Steuergerät und wandeln elektrische Energie in mechanische Arbeit oder umgekehrt.

Derartige Fahrzeugbremssysteme besitzen eine Hochdruckpumpe und verfügen über Rückschlagventile (Ein- und Auslassventile) zur Ventilierung von deren Verdrängungsraum. Für jede Radbremse ist jeweils ein elektromagnetisch ansteuerbares Einlassventil sowie ein elektromagnetisch ansteuerbares Auslassventil vorgesehen. Um zwischen Antiblockierbetrieb (Rückförderfunktion) und autonomem Druckaufbau (Fahrstabilitätsfunktion) einen Umschaltvorgang in den Saug- und Druckpfaden der Hochdruckpumpe herbeizuführen, sind zwei zusätzliche, elektromagnetisch ansteuerbare Ventile je Bremskreis vorgesehen (Trennventil TV und elektromagnetisches Umschaltventil EUV). Ein Trennventil dient zur Trennung einer direkten hydraulischen Verbindung zwischen einer Druckkammer von einem Druckgeber (Hauptbremszylinder) und einem Aktuator (Radbremse). Durch ein Umschaltventil wird es ermöglicht, fremdbetätigt also unabhängig von menschlicher Betätigung, Druckmittel aus einer Druckkammer des Druckgebers (oder einem Tank, Behälter respektive Reservoir) in Richtung einer oder mehrerer Aktuatoren zu fördern. Je nach Organisation der Bremskreise bei einem Bremssystem (bspw. Diagonal- oder Schwarz/Weiß Aufteilung)und je nach Variante von dem Fahrzeuganstriebsstrang (Allradantrieb, Front- oder Heckantrieb) sind insgesamt 12 bis 14 Elektromagnetventile mit entsprechender Verbohrung in einem Aufnahmekörper vorzusehen. Dies erhöht den Kostenaufwand für die Bohrung sowie für die elektromagnetisch ansteuerbaren Ventile. Mit Ausnahme einer teilweise vorgenommenen Drehzahlsteuerung von dem elektrischen Motor wird keine Rücksicht auf den Energieverbrauch oder auf die Bordnetzbeanspruchung vorgenommen. Diese Vorgehensweise kann für komfortmotivierte Zusatzfunktionalitäten, wie beispielsweise für eine Abstandsregelung, nicht aufrecht erhalten werden, weil es zur Erschöpfung der gebotenen, knappen Ressourcen führen würde, und außerdem die Aggregate für viele Lastfälle unnötig stark beansprucht, so dass die erforderliche Lastspielzahl nicht eingehalten werden kann.

Ganz generell wird bei hydraulischen Systemen zwischen Druck-, Volumenstrom- und Leistungsregelung unterschieden. Zur konkreten Regelung von einem geförderten Volumen oder von einem gelieferten Druck bei einer Hochdruckpumpe können vier prinzipielle Verfahrensweisen identifiziert werden ( vgl. beispielsweise J. Ivantsyn; Hydrostatische Pumpen und Motoren; 1. Aufl. 1993, Vogel Fachbuch Verlag).

In einem ersten, bekannten Regelungsprinzip wird die Förderleistung einer elektromotorisch angetriebenen Hochdruckpumpe geregelt, indem die Drehzahl des Elektromotors geregelt wird. Der Elektromotor steht bei diesen Systemen mechanisch mit einer Hydraulikpumpe in Wirkverbindung. Der geförderte Volumenstrom hängt von der Drehzahl des elektrischen Antriebsmotors ab. Die Hydraulikpumpe verfügt über keine eigenen Regelungssysteme, mit denen der Förderstrom - respektive der Druck - beeinflusst werden kann. An den Elektromotor werden hohe Anforderungen gestellt. Denn er muss in der Lage sein, sowohl große Volumenströme mit kleinen lastseitigen Systemdrücken zu verarbeiten, als auch kleine Volumenströme bei hohen Systemdrücken zu fördern. Der geförderte Volumenstrom ist proportional der Drehzahl des Elektromotors, während der lastseitige Systemdruck proportional dem vom Elektromotor aufgebrachten Drehmoment ist. Im Ergebnis ist der Elektromotor dieses elektrohydraulischen Systems sowohl in Richtung hohe Drehzahl als auch in Richtung hohes Drehmoment auszulegen. Dies erhöht die Kosten der Elektromotoren.

Daher wurden bereits elektrohydraulische Systeme vorgeschlagen, bei denen der Elektromotor mit konstanter Drehzahl betrieben wird, und wobei ein Bypass mit einem ByPass-Ventil vorgesehen ist. Der geförderte Volumenstrom der Hochdruckpumpe wird geregelt, indem das Bypass-Ventil vertellt wird. Dieses Prinzip setzt voraus, dass die Hochdruckpumpe ständig einen Soll-Volumenstrom erzeugt, der selbst dann bereitgestellt wird, wenn keine hydraulische Arbeit verrichtet werden soll. Dadurch erhöht sich die Verlustleistung, was angesichts einer angespannten Bordnetzsituation und steigender Energiekosten bei einem Kraftfahrzeug zu vermeiden ist.

Im Sinne einer dritten Lösung wurden Systeme vorgeschlagen, bei denen die Hochdruckpumpe mechanisch mit einem Antriebsmotor eines Kraftfahrzeugs gekoppelt sind. Die Antriebsdrehzahl der Hochdruckpumpe ist dadurch von der Antriebsdrehzahl des Kraftfahrzeuges abhängig. Daher sind entsprechende Vorkehrungen zu treffen, dass die Hochdruckpumpe selbst bei niedrigen Antriebsdrehzahlen stets die angeforderte hydraulische Leistung zur Verfügung stellen kann. Entsprechend umgekehrt ist der Sachverhalt bei vergleichsweise hohen Antriebsmotordrehzahlen. Um diese Nachteile zu kompensieren, muss eine umfassende mechanische Verstellmöglichkeit der Hochdruckpumpe zur Verfügung gestellt werden, wie sie beispielsweise mittels Taumelscheiben bei Klimakompressoren beschritten wird.

Schließlich sind Systeme bekannt, bei denen der Förderstrom durch eine regulierbare Drosselung des Ansaugvolumenstromes - beispielsweise mittels einer regulierbaren Blende - gesteuert wird. Dabei können nachteilige hydraulische Effekte wie insbesondere Geräuschbelästigung oder Kavitation auftreten.

Aus WO 00/46089 A ist bereits ein elektrohydraulisches Regelsystem der gattungsbildenden Art zur Betätigung von wenigstens einem Aktuator bekannt, mit einem Aggregat, das eine elektronische Steuereinheit, einen von der Steuereinheit angetriebenen Motor zur Betätigung einer Hochdruckpumpe und einen Aufnahmekörper umfasst, der die Hochdruckpumpe, mehrere elektrohydraulische Ventile sowie mehrere Kanäle aufnimmt. Am Aggregat sind mehrere Anschlüsse vorgesehen, die eine hydraulische Verbindung der Hochdruckpumpe mit einem Bremsdruckgeber als auch mit mehreren Radbremsen ermöglichen, wobei die elektrohydraulischen Ventile und der Motor mit der elektronischen Steuereinheit vernetzt sind, umfassend wenigstens ein elektrohydraulisches Ventilpaar, das sowohl für die Zu- als auch Abfuhr von Hydraulikflüssigkeit für die Hochdruckpumpe, als auch zur Druckregelung in den Radbremsen vorgesehen ist.

Ferner ist aus US 2005/088039 A1 ein elektrohydraulisches Regelsystem bekannt, das eine in einen Modulatorblock eingesetzte Hochdruckpumpe aufweist, die von einem am Modulatorblock fixierten Elektromotor angetrieben wird. In den Modulatorblock sind mehrere Ventile eingesetzt, die ebenso wie die Hochdruckpumpe über im Modulatorblock angeordnete Kanäle mit mehreren am Modulatorblock angeschlossenen Radbremsen und einem Bremsdruckgeber verbindbar sind.

Schließlich ist aus DE 197 09 740 A1 ein elektrohydraulisches Regelsystem bekannt, das an einem Ventilaufnahmekörper einen Elektromotor aufnimmt, der eine im Ventilaufnahmekörper integrierte Pumpe antreibt, die ebenso wie mehrere im Ventilaufnahmekörper angeordnete Ventile über im Ventilaufnahmekörper angeordnete Kanäle mit einem am Ventilaufnahmekörper anschließbaren Bremsdruckgeber und mehreren Radbremsen verbindbar sind.

Es ist eine Aufgabe der vorliegenden Erfindung, die geschilderten Nachteile zu vermeiden, und ein vereinfachtes elektrohydraulisches Regelsystem mit regulierbarer Hochdruckpumpe zur Verfügung zu stellen, das sich bei ökonomischer, kompakter Bauweise und bei ressourcenschonendem Verbrauch auch universell für Anwendungen außerhalb einer Fahrzeugbremsenregelung eignet.

Die Aufgabe wird für ein elektrohydraulisches Regelsystem der angegebenen Art durch die kennzeichnenden Merkmale des Patentanspruchs 1 gelöst.

Die Hochdruckpumpe ist selbstansaugend sowie regulierbar und reversierbar ausgebildet, indem Saug- und Druckventile als elektrohydraulisch ansteuerbare Schaltventile ausgebildet sind. Dabei sollte saugseitig und druckseitig hinter den elektrohydraulischen Ventilen (von der Hochdruckpumpe aus betrachtet) jeweils ein Drucksensor vorgesehen sein, mit denen anhand von Soll-Istwertvergleichen sowie anhand von entsprechenden Ventilbetätigungen der gewünschte Druckwert eingestellt werden kann.

Durch die Gesamtheit der Merkmalskombination vom unabhängigen Patentanspruch wird es erstmals ermöglicht, dass die Schaltventile nicht nur zur Ventilierung von einem Verdrängungsraum der Pumpe, sondern auch für die Druck und Richtungsregelung des Förderstromes zuständig sind. Die Erfindung ermöglicht eine einfache Regelung auf Basis der beiden Ventile. Durch diese Maßnahme wird eine einfache Verbohrung von dem Aufnahmekörper ermöglicht. Die Anzahl der notwendigen Elektromagnetventile wird wesentlich reduziert.

Ausgestaltungen, Weiterbildungen und Einzelheiten der Erfindung ergeben sich aus Unteransprüchen zusammen mit der Beschreibung anhand mehrerer Zeichnungen.

In den Zeichnungen zeigt:
- Fig. 1: ein hydraulischer Schaltplan eines hydraulischen Regelsystems am Beispiel eines offenen, 2-kreisigen, Bremsenregelsystems,
- Fig. 2: schematischer Schnitt durch ein Aggregat mit einem Aufnahmekörper für ein Bremsenregelsystem mit integrierter Hauptzylinder-Simmulator-Einheit auf Basis von einem Schaltplan nach Fig. 1 (8-Ventiler),
- Fig. 3: Ansicht von einem Aggregat nach Fig. 2
- Fig. 4: hydraulischer Schaltplan von einer Ausführungsform am Beispiel von einem geschlossenen, 2-kreisigen, Bremsenregelsystem,
- Fig. 5: schematisch sowie teilweise im Schnitt ein Radbremszweig von einem Bremsenregelsystem gemäß Fig. 4,
- Fig. 6: schematisch ein Aggregat mit einem Verbohrungskonzept eines Aufnahmekörpers für ein Bremsenregelsystem nach Fig. 5 (6-Ventiler),
- Fig. 7: Ansicht von einem Aggregat nach Fig. 6,
- Fig. 8: ein geschlossenes, elektrohydraulisches Regelsystem mit einem Aktuator, schematisch sowie teilweise im Schnitt,
- Fig. 9: Ansicht von einem Aggregat für ein Regelsystem nach Fig. 8,
- Fig. 10: Teilweise ein Schnitt durch ein Aggregat für ein Regelsystem mit integriertem Aktuator nach Fig. 9,
- Fig. 11: Schnitt durch ein kompaktes Aggregat für ein Regelsystem,
- Fig. 12: Skizze zur Verdeutlichung unterschiedlicher Arbeitstakte und Betriebsbedingungen bei einem Regelsystem mit Hochdruckpumpe,
- Fig. 13 + 14: perspektivisch sowie quasitransparent ein Aufnahmekörper eines Aggregats für ein zweikreisiges Regelsystem, und
- Fig. 15: eine reversierbare, regulierbare Hochdruckpumpe für ein zweikreisiges Regelsystem im Schnitt.

Es wird ein mehrkreisiges elektrohydraulisches Regelsystem 1 beschrieben, das als hydraulischer Verstärker wirksam ist, und insbesondere zur by-wire-Betätigung von wenigstens einem Aktuator 2,3,4,5 in einem Kraftfahrzeug dient. Die Systemgrenze des Gesamtaggregates ist in der Skizze gestrichelt verdeutlicht. Elektrischer Signalfluss zwischen elektrischen Elementen und einem Mikrocontroller ist (zur Erhaltung der Übersichtlichkeit nur für einen hydraulischen Kreis) strichpunktiert dargestellt. Prinzipiell ist das beschriebene elektrohydraulische Regelsystem in der Lage, bekannte pneumatische, elektromechanische oder hydraulische Verstärker, insbesondere Bremskraftverstärker 6 zu ersetzen. Als Aktuator 2,3,4,5 kommt exemplarisch ein Kolben-Zylinderaggregat, wie insbesondere eine Radbremse R1-R4, zum Einsatz. Die Radbremse R1-R4 soll prinzipiell unabhängig von einer Unterdruckverstärkung durch den pneumatischen Bremskraftverstärker 6 betätigt werden.

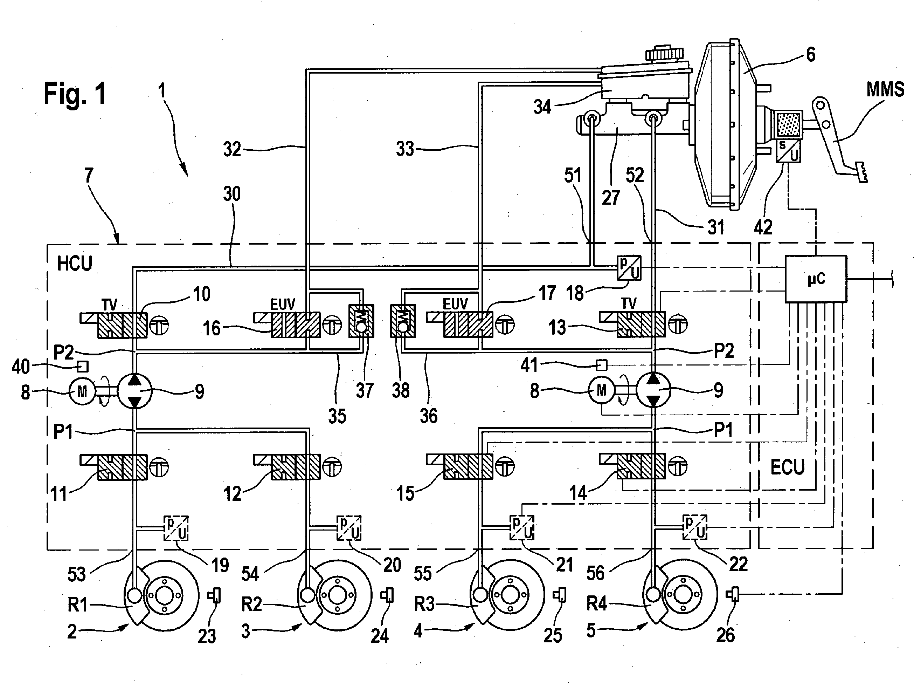

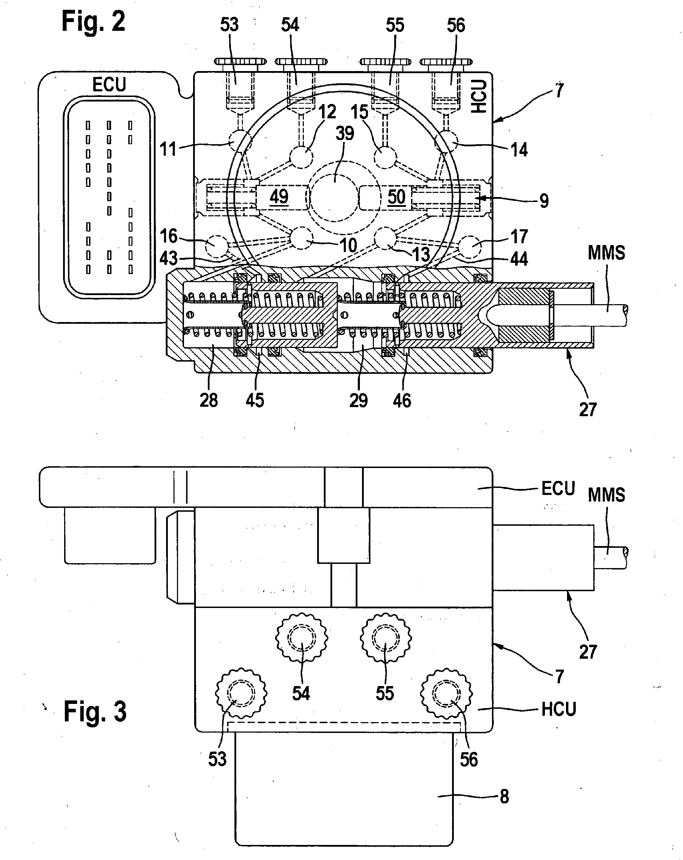

Am Beispiel von einem Bremsenregelsystem gemäß dem Schaltplan nach Fig. 1 umfasst ein derartiges elektrohydraulisches Regelsystem 1 gemäß Fig. 2 und 3 ein blockförmiges Aggregat 7 mit einer elektronischen Steuereinheit ECU enthaltend elektronische Bauelemente wie insbesondere einen Mikroprozessor und damit verbundene Ventilspulen, eine hydraulische Steuereinheit HCU, und einen an der HCU befestigten elektrischen Motor 8, der elektrisch mit der ECU verbunden ist, und von dieser angesteuert wird, um eine Hochdruckpumpe 9 der hydraulischen Steuereinheit HCU anzutreiben. Die hydraulische Steuereinheit HCU nimmt im Sinne von einem Gehäuse die förderstromreversierbare Hochdruckpumpe 9, sechs stromlos offene, elektromagnetisch betätigbare, schaltbare Ventile 10-15 und zwei stromlos geschlossene, schaltbare Ventile 16,17 sowie Kanäle für insgesamt zwei Bremskreise auf. Weiterhin bietet es sich an, vorzugsweise fünf Mittel zur Druckerfassung 18-22 an oder in der HCU anzuordnen, um Vordruck und Radbremsdruck zu erfassen. Dadurch wird es zusammen mit Drehinformationen von Raddrehsensoren 23,24,25,26 ermöglicht, eine schlupfgeregelte, radindividuelle Bremsdruckregelung durchzuführen.

Die weitere Beschreibung des Regelsystems 1 erfolgt lediglich anhand von einem Bremskreis, weil der jeweils andere Bremskreis mit weitgehend vernachlässigbaren Ausnahmen identisch ausgebildet ist, so dass die nachstehend beschriebenen Merkmale für beide Bremskreise identisch vorgesehen sind.

Für einen stromlosen Notbremsbetrieb ist eine Druckkammer 28,29 eines Druckgebers (Hauptzylinders) 27 über eine Leitung 30, die sich in einem Verzweigungspunkt P1 verzweigt, direkt mit jeweils zwei - in einem Bremskreis organisierten - Radbremsen R1, R2 verbunden. Dadurch wird eine direkte hydraulische Betätigungsmöglichkeit zwischen Druckgeber 27 und Aktuator 2,3 geschaffen. Wenn, wie in Fig. 1, dem Druckgeber 27 ein konventionell-pneumatisch arbeitender Bremskraftverstärker 6 zugeordnet ist, steht selbst bei stromlosem Notbremsbetrieb eine (stromlose) Servoverstärkung zur Verfügung. Es wäre jedoch sicher zu stellen, dass der Bremskraftverstärker 6 nur im Fehlerfall auf die Aktuatoren 2,3 einwirken kann. Dies kann beispielsweise durch eine zu überbrückende Lücke im Betätigungsstrang erreicht werden.

Nachstehend werden Mittel und Vorgehensweisen zur elektrohydraulischen by-wire-Betätigung von einem oder mehreren Aktuatoren 2-5 - die insbesondere als Radbremsen R1-R4 ausgeführt sein können - beschrieben.

Ganz generell ist es denkbar und möglich, jedweden Betätigungs- oder Lösevorgang (Bremsvorgang) eines Aktuators 2-5 by-wire, also ohne direkte hydraulische Rückwirkung auf einen Druckgeber 27, gewissermaßen unter Verwendung von dem bereitgestellten hydraulischen Verstärker, auszuführen. Andererseits ist es denkbar, von dieser Möglichkeit nur eingeschränkt, beispielsweise bezogen auf ausgewählte Regeleingriffe (beispielsweise für Schlupf- und Fahrstabilitätsregeleingriffe), Gebrauch zu machen. Wenn beispielsweise ein pneumatischer Bremskraftverstärker 6 aus irgendwelchen Gründen (fehlender Einbauraum, fehlende Vakuumversorgung) gänzlich entfallen muss, stellt die beschriebene Druckquelle nach Maßgabe von einem - am Druckgeber sensorisch (Weg- und/oder Kraftsensor) erfassten Bremswunsch - jegliche Betätigungskraft für die Aktuatoren 2-5 zur Verfügung. Sofern ein pneumatischer Bremskraftverstärker 6 jedoch implementierbar ist, kann dieser im Sinne einer redundanten Lösung die oben beschriebene Servounterstützung selbst bei Fehlern im hydraulischen Verstärker ermöglichen.

Zur individuellen Druckregelung jedes Aktuators 2-5 ist gemäß Fig. 1 jeder Radbremse R1-R4 jeweils ein stromlos offenes Ventil 11-15 vorgeschaltet. In der Leitung 30 ist die Hochdruckpumpe 9 zwischen dem Verzweigungspunkt P1 sowie einem weiteren Verzweigungspunkt P 2 geschaltet. Die Hochdruckpumpe 9 arbeitet prinzipiell mit konstanter, bevorzugt jedoch mit variabel geregelter Drehzahl des elektrischen Motors 8. Wie nachstehend noch geschildert wird, ist die Hochdruckpumpe 9 regelbar sowie reversierbar, was bedeutet, dass deren Einlass und Auslass je nach Verwendungszweck gewendet (kommutiert) werden kann.

Die Hochdruckpumpe 9 ist ausgehend vom Verzweigungspunkt P2 mittels der Leitung 30,31 mit einer Druckkammer vom Druckgeber 27, und mittels einem anderen Leitungsabschnitt 32,33 mit einem drucklosen Behälter 34 (Reservoir, Tank) verbunden. In der Leitung 30,31 die zur Druckkammer führt, befindet sich jeweils das stromlos offene, schaltbare Ventil 10,13 sowie der Drucksensor 18. Das stromlos offene Ventil 10,13 ermöglicht in einer Sperrstellung eine Unterbrechung der Leitung 30,31 durch Abtrennung der Druckkammer von den Aktuatoren 2-5. Der Drucksensor 18 ermöglicht die Erfassung von einem betätigungsseitig eingesteuerten Vordruck in der Leitung 30. In dem Leitungsabschnitt 32,33 der zum Behälter 34 führt, ist jeweils ein stromlos geschlossenes; schaltbares Ventil 16,17 angeordnet. Um bei Fehlfunktionen eine verbesserte Sicherheit zu entfalten, verfügt das stromlos geschlossen Ventil 16,17 in seiner Sperrstellung über einen automatisch, druckabhängig öffnenden Bypass 35,36 in Richtung Behälter 34, der es ermöglicht, übertrieben hohe Drücke der Hochdruckpumpe 9 in Richtung Behälter 34 abzubauen. Zweckmäßigerweise ist der genannte Bypass 35,36 mit einem Rückschlagventil 37,38 versehen, und in das stromlos geschlossene Ventil 16,17 integriert.

Mit dem beschriebenen Schaltplan wird es ermöglicht, mit Hilfe einer selbstansaugenden Hochdruckpumpe 9 sowie der drei stromlos offenen Ventile 10,11,12 in einem Bremskreis eine elektrohydraulisch verstärkte, radindividuelle, antiblockiergeschützte Bremsdruckregelung zu ermöglichen. Dabei sind die Ventile 10,11,12 sowohl für die Ventilierung der Hochdruckpumpe 9 wie auch für die Radbremsdruckruckregelung verantwortlich, was eine entsprechende Synchronisierung untereinander, wie auch eine entsprechende Synchronisierung mit einem Drehwinkel von einem Exzentertrieb der Hochdruckpumpe 4 (Verdrängerpumpe - vorzugsweise Radialkolbenpumpe) und gegebenenfalls mit der Drehzahl von dem elektrischen Motor 8 erfordert. Innerhalb der elektronischen Steuereinheit ECU ist die Funktionsstellung der Ventile 10-17 bekannt, so dass diese Information ohne zusätzliche Sensoren oder Erfassungsmittel für die Synchronisierung ausgenutzt werden kann. Der elektrische Motor 8 verfügt über eine gegebene Drehrichtung wobei Drehinformationen (Drehzahl/Winkelgeschwindigkeit und/oder momentane Positions-/Drehwinkelstellung beispielsweise zur Erkennung von oberem Totpunkt oder unterem Totpunkt eines Exzentertriebs 39) des Motors 5 mit geeigneten Mitteln (Drehzahlsensor und/oder Positionssensor 40,41) direkt gemessen oder ermittelt werden.

Besondere Pulsationsdämpfungsmittel sind nicht erforderlich. Denn wenn der Druckgeber 27 abgetrennt ist, und wenn ein Ansaugvorgang der Hochdruckpumpe 9 aus dem Behälter 34 erfolgt, erzeugt dies im Normalbremsbetrieb keinerlei spürbare Rückwirkungen am Druckgeber 27 oder der Mensch-Maschine-Schnittstelle MMS. Im Unterschied zu herkömmlichen Bremssystemen kann je Bremskreis eine volumetrische Elastizität in Form von einem Niederdruckspeicher in der hydraulischen Leitung 30,31 zwischen Hochdruckpumpe 9 und den Radbremsen R1, R2, R3, R4 entfallen. Denn überschüssiges Fluid kann in den Behälter 34 abgelassen werden. Durch den Entfall vom Niederdruckspeicher wird die Baugröße der HCU gesenkt.

Für fahrerunabhängige Druckaufbauvorgänge (Antriebsschlupfregelung, Fahrstabilitätsregelung) wird zum Ansaugen bei laufender Hochdruckpumpe 9 im Saugtakt eines Verdrängerkolbens das im Leitungsabschnitt 32,33 in Richtung Behälter 34 angeordnete, stromlos geschlossene Ventil 16,17 geöffnet, während das in der Leitung 30,31 Richtung Druckkammer angeordnete, stromlos offene Ventil 10,13 geschlossen wird. Wegen der Abtrennung des Druckgebers 27 erhält ein Fahrzeugführer auch in diesem Betätigungsfall keinerlei komfortmindernde Rückwirkung. Das konkrete Druckniveau in den Aktuatoren 2-5 (Radbremsen R 1 - R 4) wird durch regulieren der radbremsseitig angeordneten, stromlos offenen, schaltbaren Ventile 11-14 reguliert.

Die Kommutierung der Hochdruckpumpe geschieht wie folgt. Alle Ventile 10-17 sind von der elektronischen Steuereinheit ECU angesteuert, sowie als elektrohydraulische Schaltventile ausgebildet. Durch diese Maßnahme wird es im Unterschied zu herkömmlichen differenzdruckgesteuerten (also zwangsgesteuerten) Pumpenrückschlagventilen ermöglicht, die Förderung der Hochdruckpumpe 9 in Hinblick auf die Saug- und Druckvorgänge auch hinsichtlich der Phasenlage vom Exzentertrieb 39 sowie in Abhängigkeit von der Drehzahl des Motors 8 unmittelbar zu beeinflussen. Mit anderen Worten wird eine Entkoppelung zwischen Förderstrom, hydraulischem Druck und der Antriebsdrehzahl bei konstanter Antriebsleistung ermöglicht. In einem Ausschub- oder Verdrängungstakt (nach dem unteren Totpunkt) bleibt dasjenige Ventil geöffnet, welches sich auf der gewünschten Druckseite befindet, während das auf der gegenüber liegenden Saugseite liegende Ventil geschlossen wird. Für einen Saugtakt erfolgt dies diametral umgekehrt. Folglich ergibt sich die Möglichkeit, den Förderstrom bei gegebener Antriebsleistung beliebig elektrisch gesteuert zu reversieren, und hinsichtlich Menge sowie Druck zu beeinflussen, ohne die Drehrichtung vom Motor 8 umzukehren. Die umfangreichen elektronischen Eingriffsmöglichkeiten erlauben es zum Beispiel auch, das Betätigungsverhalten und die Betätigungscharakteristik der angesteuerten Aktuatoren 2-5 im laufenden Prozess zu beeinflussen. Besonders vorteilhaft ist es beispielsweise für Fahrzeugbremsanwendungen, wenn die Hochdruckpumpe 9 zum Vorfüllen von Radbremsen R1 - R 4 zu Betätigungsbeginn einen hohen Volumenstrom bei niedrigem Druck bereitstellt, um mit fortschreitendem Betätigungsprozess sukzessive in einen Hochdruckbereich bei verringertem Volumenstrom zu wechseln. Durch diese Funktionalität kann es zwecks komfortablerer Bremsenregelung - unabhängig von einer konkreten Betätigungscharakteristik durch einen Fahrzeugführer - ermöglicht werden, automatisch einen stets reproduzierbaren, sanften, Einbremsprozess bereitzustellen, wobei der Druck danach dennoch hochdynamisch gesteigert werden kann. Diese Funktionalität ist vorzugsweise für eine automatische Abstandsregelung (ICC) nutzbar. Die Ventile 10-17 sind multifunktional wirksam, was den Aufwand gegenüber bekannten Aggregaten verringert. Denn sie dienen sowohl zur Koordinierung von Ansaug- und Ausschubprozessen der Hochdruckpumpe 9, wie auch zur konkreten Druckregelung im Aktuator 2-5. Im Ergebnis wird eine verbesserte, komfortable Aktuatorbetätigung mit verringerter Bauteilzahl erreicht.

Durch die fortgeschrittene Elektrifizierung ist das Aggregat 7 umfassend in ein Kraftfahrzeugregelungssystem integrierbar, wobei die elektronische Steuereinheit ECU mit weiteren elektronischen Steuereinheiten des Fahrzeugs elektronisch vernetzt sein kann, um beispielsweise durch automatischen, autarken -also fahrerunabhängigen - Druckaufbau zu einer Kollisionsvermeidung beizutragen.

Weiterhin ist die ECU mit einer Leistungsendstufe zur Niederspannungs-Gleichstromversorgung oder zur Drehstromversorgung des elektrischen Motors 8 versehen, wobei diese Endstufen auf einer Platine gemeinsam mit einem Regler für die Ventile 10-17 vorgesehen sein können. Die ECU kann insbesondere eine elektronische Kommutierungsvorrichtung für den elektrischen Motor 8 aufweisen, wobei die elektronische Kommutierungsvorrichtung in der elektronischen Steuereinheit ECU integriert vorgesehen ist.

Die ECU ist zumindest elektrisch mit den Raddrehsensoren 23-26, den Drucksensoren 18-22, dem elektrischen Motor 8 sowie mit Spulen der Ventile 10-17 verbunden, wobei weiterhin wenigstens eine Mensch-Maschine-Schnittstelle (Pedal) mit einem oder mehreren Sensoren 42 vorgesehen sein kann, um einen Fahrerwunsch (Pedalweg- oder Pedaldrucksensor) für die By-Wire-Funktionen zu erfassen.

Zwischen elektrischem Motor 8 und der Hochdruckpumpe 9 ist ein kinematischer Wandler, insbesondere ein Rot-Trans-Wandler in Form von dem Exzentertrieb 39 vorgesehen. Die Hochdruckpumpe 9 ist als förderstromreversierbare Verdrängerpumpe ausgebildet und weist gemäß Ausführungsform zwei voneinander unabhängige Hydraulikkreise auf. Es sind elektronisch-softwaregesteuerte Synchronisierungsmittel vorgesehen, die eine hydraulische Kommutierung von Saugpfad und Druckpfad ermöglichen.

Obwohl vorstehend von einem einzigen Motor 8 gesprochen wird, könnte jeder Bremskreis eine eigene Hochdruckpumpe 9 mit einem eigenen Motor 8 erhalten. Diesbezüglich besteht ein gravierender Unterschied zu konventionellen Bremsaggregaten, bei denen zur Energieversorgung von beiden Bremskreisen stets ein einziger Motor vorgesehen ist. Folglich wären zwei Motoren 8 und zwei elektrische Versorgungskreise für die beiden Motoren 8 innerhalb der ECU sowie gegebenenfalls Synchronisierungsmittel für eine Synchronisierung zwischen diesen beiden Motoren 8 vorzusehen.

Wie erläutert sind in weiterer Ausgestaltung der Erfindung die Synchronisierungsmittel in Form von Software für analogisiert regelbare, schaltbare Ventile 10-17 ausgebildet. Diese weisen jeweils in grundsätzlich bekannter Bauweise einen Ventilsitz und einen Schließkörper auf (in der Fig. 1 als Piktogramm verdeutlicht), wobei derartige Sitzventile neben einer Öffnungsstellung und einer Schließstellung wenigstens eine Teilöffnungsstellung aufweisen können, welche eine verbesserte Regulierbarkeit ermöglicht, so dass vielerorts von so genannten analogisiert regelbaren Schaltventilen gesprochen wird. Die Synchronisierungsmittel ermöglichen folglich eine variable Ventilierung, insbesondere eine zeitversetzte Steuerung der Ventile 10-17. Die Synchronisierung und die Schaltfrequenz der Ventile 10-17 erfolgt unter Verwertung von Drehinformationen von dem Motor 8. Diese Informationen werden vorzugsweise sensorlos mittels Auslesung einer Generatorspannung oder sensorgebunden mittels Sensoren 40,41 gewonnen.

Ein erfindungsgemäße Aggregat 7 eignet sich vorwiegend zur Ansteuerung von Aktuatoren 2-5 zwecks Fahrzeugstabilitätsregelung, zur Bremsenregelung, zur Handbremsregelung, zur Lenkungsregelung, zur Niveauregelung, zur Schalt- oder Automatikgetrieberegelung, zur relativen Verstellung von Chassisbauteilen und/oder zur kombiniert-vernetzten Regelung der vorgenannten Funktionen. Weitere Verwendungszwecke im Automobilbereich sind denkbar.

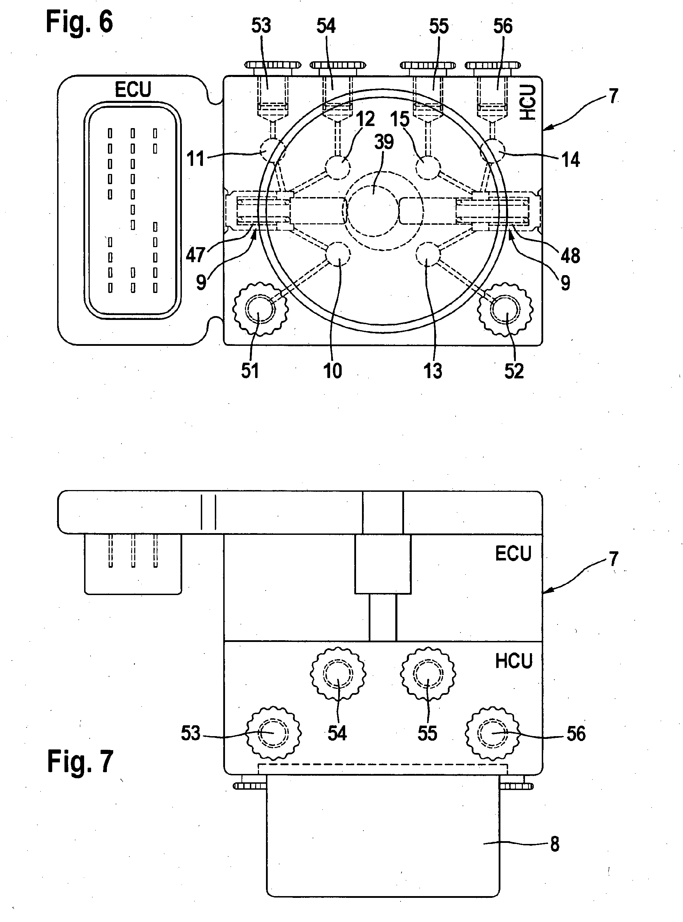

Fig. 2 verdeutlicht teilweise im Schnitt ein Aggregat 7 mit einer Verbohrung gemäß Schaltplan nach Fig. 1 als auch eine Weiterbildung mit in der hydraulischen Steuereinheit HCU integriert angeordnetem Druckgeber (Hauptzylinder) 27 einschließlich Druckstange. Der Druckgeber 27 weist zwei Druckkammern 28,29 und zwei Kolben zur individuellen Betätigung von den zwei Bremskreisen auf. Radbremsseitig und auch in Hinblick auf die Anbindung der Druckkammern 28,29 ist die Verbohrung identisch mit der Ausführungsform nach Fig. 6 ausgebildet. Zur Vermeidung unnötiger Wiederholungen wird auf die diesbezügliche Beschreibung verwiesen. Die gesonderte Leitung 32,33 in Richtung Behälter 34, welche für ein offenes System charakteristisch ist, wird durch eine Stichbohrung 43,44 zu einem Nachlaufraum 45,46 des Druckgebers 27 realisiert. Der Nachlaufraum 45,46 steht hydraulisch mit dem Behälter 34 in Verbindung. Die Fig. 3 veranschaulicht eine Ansicht von dem Aggregat 7 gemäß Fig. 2.

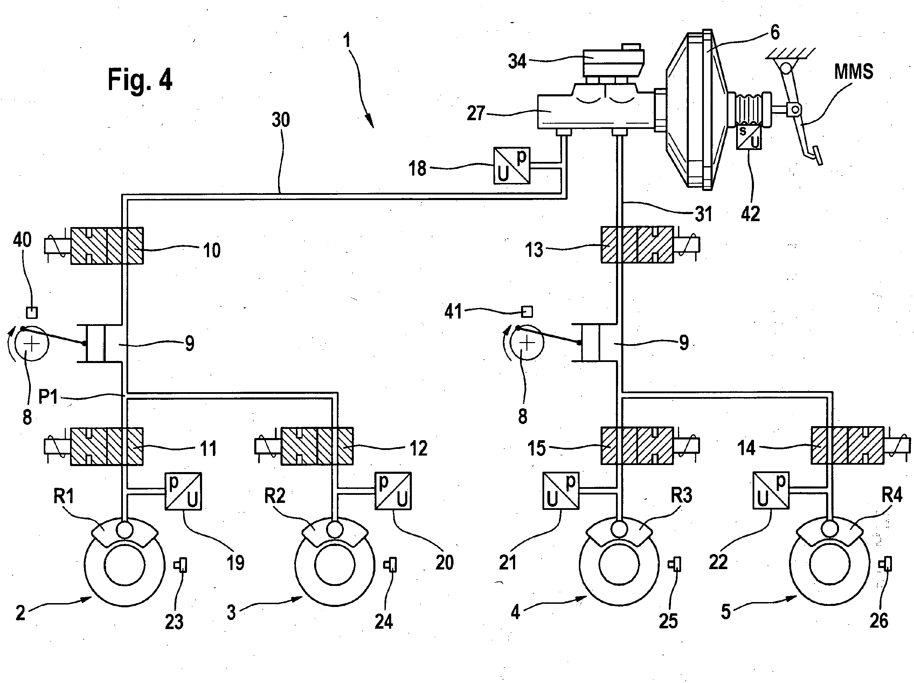

Fig. 4 unterscheidet sich lediglich von der Fig. 1, indem ein geschlossenes System vorgesehen ist, wobei je Bremskreis ein gesonderter Leitungsabschnitt 32,33 zu einem Behälter 34, wie auch ein gesondertes, stromlos geschlossenes Ventil 16,17 (EUV) in dem betreffenden Leitungsabschnitt 32,33 entfällt. Bei einem fahrerunabhängigen, autonomen, Druckaufbau erfolgt ein Ansaugvorgang stets aus einer Druckkammer 28,29 vom Druckgeber 27. Durch die synchronisierte Ansteuerung der Ventile 10-15 erhält ein Fahrzeugführer keine oder nur geringe spürbare Rückwirkungen (Vibration, Geräusche) über Fahrzeugregelvorgänge. Soweit keine symmulatorartige Trennung zwischen Mensch-Maschine-Schnittstelle MMS und Aktuator 2-5 vorgesehen ist, kann jedoch eine Verschiebung an der Mensch-Maschine-Schnittstelle MMS (Pedal) spürbar sein. Das System ist im Vergleich zur Fig. 1 besonders kostengünstig und auch miniaturisiert, weil die oben beschriebenen Bauteile entfallen.

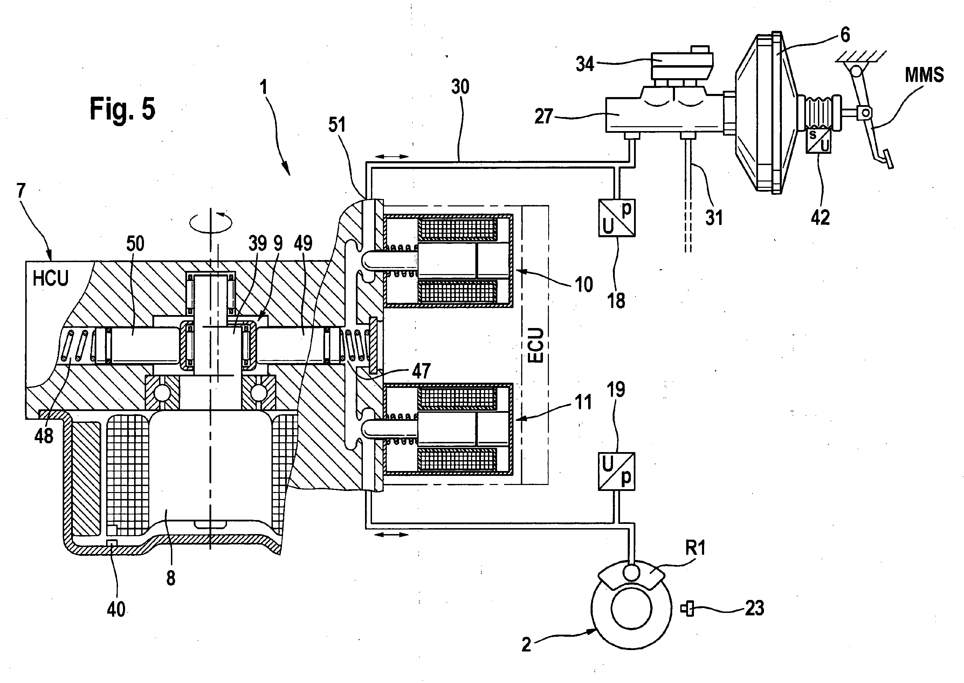

Die Fig. 5 verdeutlich stark schematisiert lediglich einen Teil mit einer Radbremse R 1 vom geschlossenen System nach Fig. 4 wobei eine nicht gezeichnete Druckkammer 28 vom Druckgeber 27 (Hauptzylinder) mit einem Aktuator 2 (Radbremse R1) verbunden ist. Die Leitung 30 mündet hinter dem Ventil 10 in einen Verdrängungsraum 47 der Hochdruckpumpe 9, die in der HCU integriert vorgesehen ist. Das teilweise im Schnitt dargestellte Aggregat 7 umfasst weiterhin das Ventil 11, den elektrischen Motor 8 mit Exzentertrieb 39 für Pumpenkolben 48,49, die in Verdrängungsräume 47,48 eintauchen, weitere, selektiv vorgesehene Bauelemente, die mit den vorstehenden Ausführungsformen übereinstimmen und daher mit identischen Bezugsziffern gekennzeichnet sind, sowie die elektronische Steuereinheit ECU.

Die Fig. 6 ermöglicht relativ schematisch einen Einblick in die erfindungsgemäß stark vereinfachte Verbohrung und Kanalführung innerhalb einer HCU (6-Ventiler), die ebenfalls prinzipiell mit Fig. 4 korreliert. Dabei sind für jeden Bremskreis Druckgeberanschlüsse 51,52 ersichtlich, welche nach Durchtritt durch das schaltbare Ventil in den Verdrängungsraum 47,48 der jeweiligen Hochdruckpumpe 9 einmünden. Darüber hinaus sind Radbremsanschlüsse 53-56 für paarweise organisierte Radbremsen R1 - R4 dargestellt, welche jeweils nach passieren vom Ventil 19-22 in den jeweiligen Verdrängungsraum 47,48 einmünden. Fig. 7 zeigt eine Draufsicht auf eine Anschlusseite einer HCU gemäß Fig. 6 mit den beschriebenen Radbremsanschlüssen 53-56.

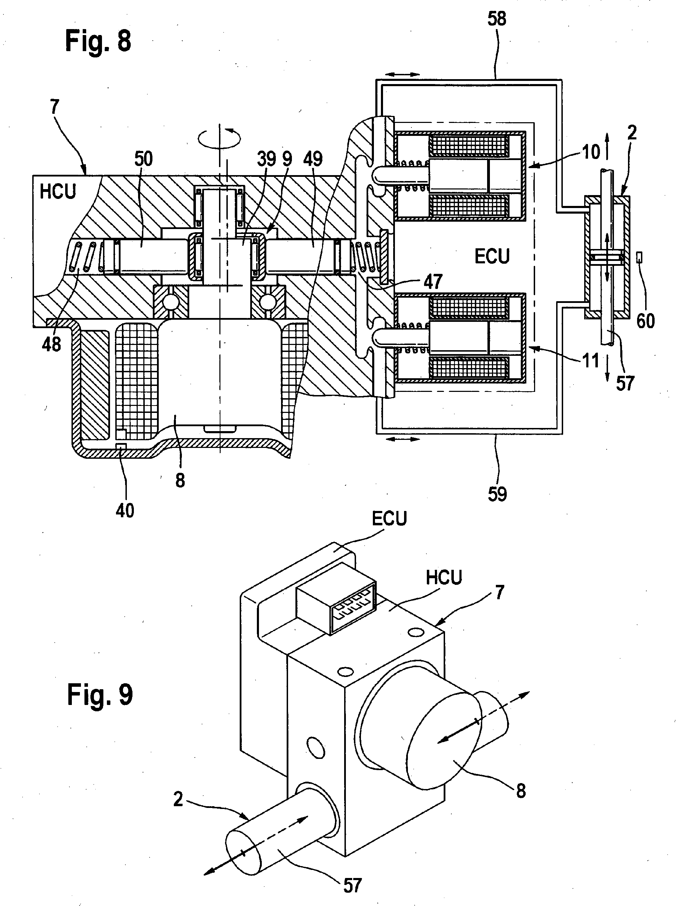

Fig. 8 verdeutlicht eine einkreisige Applikation von einem Aggregat 7 (2-Ventiler) vergleichbar Fig. 5 zwecks Energieversorgung von einem einfachen Aktuator 2 in Form von einem Kolben-Zylinderaggregat, wobei keinerlei Druckgeber für einen hydraulischen Durchgriff von einer betätigenden Person, und auch keine elektromagnetische Umschaltventile EUV vorgesehen sind. Eine weitere schematisch verdeutlichte Hochdruckpumpe des Aggregates 7 kann zum Antrieb von anderen Aktuatoren herangezogen werden, und wird hier vernachlässigt. Der Aktuator 2 ist als reversierbare KolbenZylindereinheit mit einer Kolbenstange 57 dargestellt. Im Unterschied zu den Fig. 1-7 ist kein Behälter, Tank oder Reservoir vorgesehen, sondern es erfolgt eine Umlaufzirkulation des Druckmittels. Mit anderen Worten wird das einerseits aus einer Druckkammer des Aktuators 2 entnommene Druckmittel in eine gegenüberliegende, und durch den Kolben abgetrennte Druckkammer verschoben. Zu diesem Zweck ist der Aktuator 2 mit zwei Leitungen 58,59 an den Verdrängungsraum 47 der Hochdruckpumpe 9 angeschlossen. Zusätzlich zum Drehzahl- und/oder Drehlagesensor 40 am elektrischen Motor 8 kann eine Vorrichtung zur Wegerfassung 60 am Aktuator 2 vorgesehen sein. Drucksensorik und Raddrehsensorik kann entfallen.

Aus Fig. 8 wird der prinzipielle Vorschlag besonders deutlich, sowohl für die Ventilierung jeder Hochdruck(verdränger)pumpe 9 als auch zur Druckregelung vom Aktuator 2 je Hydraulikkreis zumindest nur ein synchronisiert schaltbares, elektrohydraulisches Ventilpaar 10,11 (Ventilduo) vorzusehen, so dass differenzdruckgesteuerte Rückschlagventile zur Ventilierung der Hochdruckpumpe 9 entfallen können. Soweit weitere Funktionalitäten (Fremdbetätigung eines Bremssystems) bei einem offenen System (Fig. 1) erforderlich sind, kann dagegen von einem Ventilquartett 10,11,12,16;13,14,15,17 je Hydraulikkreis gesprochen werden. In einem geschlossenen System (Fig. 4) erfolgt eine Reduktion in Hinblick auf ein Ventiltrio (10,11,12;13,14,15).

Die Fig. 9 verdeutlicht in einer dreidimensionalen Ansicht ein einstückig ausgeführtes, kompaktes Aggregat 7, wobei sämtliche hydraulisch wirksamen Bauteile einschließlich der elektrischen und hydraulischen Leitungen, wie auch der Aktuator 2 innerhalb des Aggregates 7 integriert vorgesehen sind, und wobei sämtliche elektronischen Bauteile innerhalb der elektronischen Steuereinheit ECU vorgesehen sind.

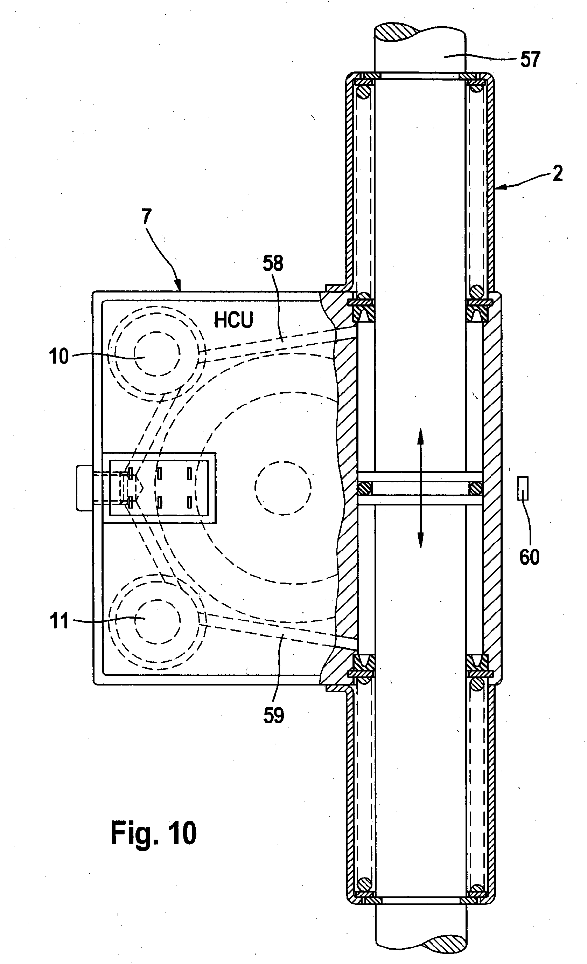

Fig. 10 verdeutlicht das Aggregat 7 nach Fig. 9 im Schnitt, wobei ebenfalls die hydraulischen Leitungen 58,59 für die Versorgung des Aktuators 2, wie auch der Aktuator 2 selbst an oder in der HCU integriert vorgesehen sind.

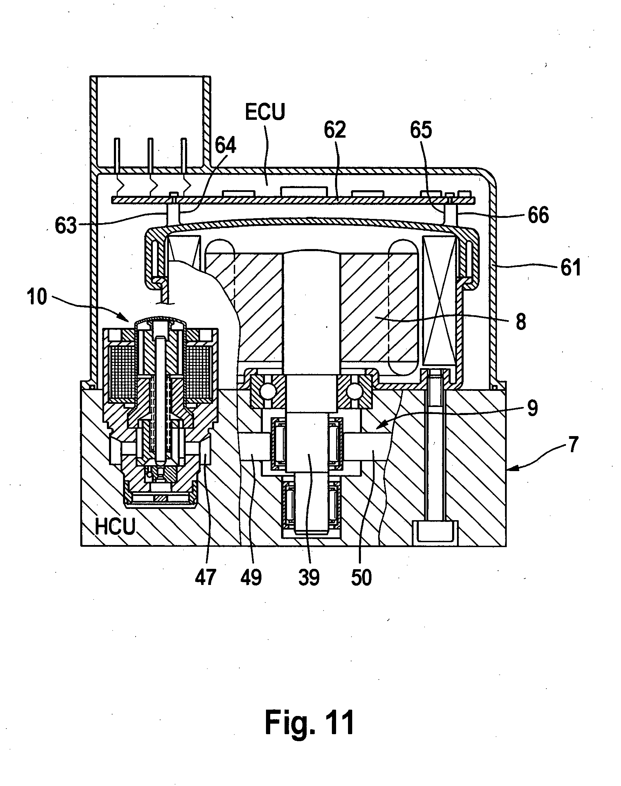

Fig. 11 zeigt im Schnitt eine besonders kompakt integrierte Bauweise von einem Aggregat 7. Die hydraulische Steuereinheit HCU nimmt die Hochdruckpumpe 9 und elektrohydraulische Ventile 10 auf, deren Ventildome und Spulen auf der Seite des elektrischen Motors 8 platziert sind. Ein Gehäuse 61 der elektronischen Steuereinheit ECU übergreift den elektrischen Motor 8 und die Ventile 10. Die elektronischen Bauteile der ECU sind auf einer Platine 62 angeordnet, die an ihrem Gehäuse 61 befestigt ist. Die Versorgung zwischen Motor 8, Ventilen 10 und ECU erfolgt über integrierte Zuleitungen 63-66.

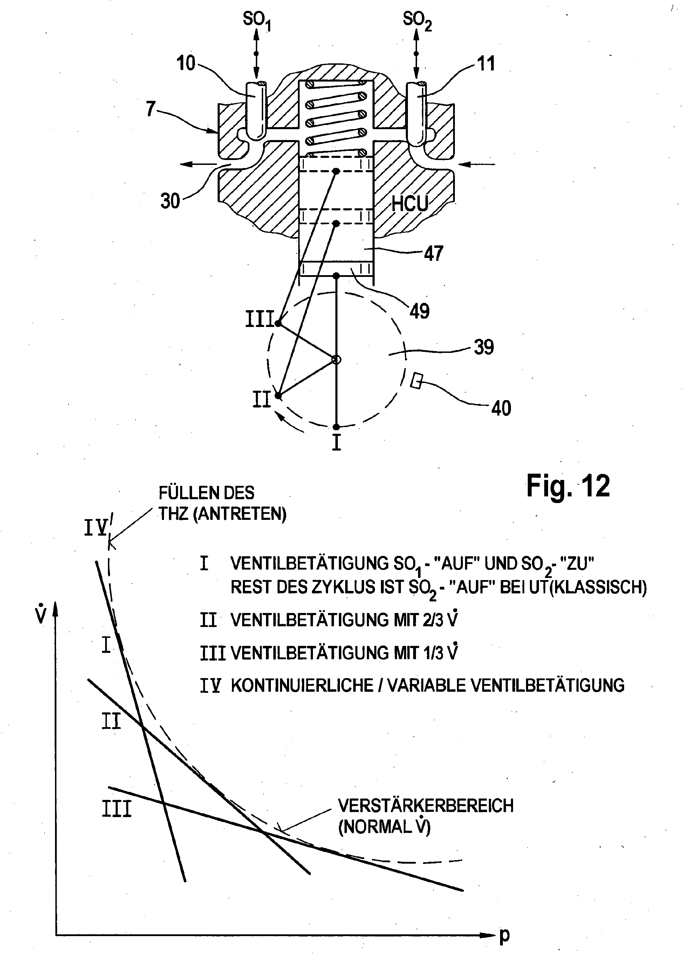

Die Fig. 12 veranschaulicht schematisch einen Förderstrom V einer Hochdruckpumpe 9 mit variabler Synchronisierung für mehrere Kurbeldrehwinkel (Stadien). Es erfolgt eine variabel abgestimmte Synchronisierung der Ventilansteuerung mit dem Ziel einer Regelung von Druck p und Volumenstrom V unter Berücksichtung von unterschiedlichem Ausgangsniveaus. Dazu ist die Ansteuerung von zwei als Saug- oder Druckventilen wirksamen, stromlos offenen Schaltventilen SO1, SO2 (10,11) für unterschiedliche Kurbeldrehwinkel I-IV unter Einbezug von einem oberen Totpunkt (OT) und einem unteren Totpunkt (UT) des Exzentertriebs 39 verdeutlicht. Dabei sind lineare Förderschaubilder dargestellt, die bei einem Regelsystem 1 den geförderten Volumenstrom in Abhängigkeit von dem Druck darstellen. Zum Füllen eines Aktuators 2 (Radbremse R 1-R4 ) gemäß Schaubild I wird durch die Synchronisierung der Ventile 10,11 ein hoher Volumenstrom bei geringem Druck erzielt. Mit steigendem Druckniveau wird das Fördervolumen entsprechend Schaubild II und III auf 2/3 oder 1/3 des ursprünglichen Volumenstroms V zurück genommen. Phase IV verdeutlicht eine weiter verbesserte, kontinuierliche Regelung, bei der die unterschiedlichen linearen Schaubilder quasi nach Art einer Kurve umgesetzt sind.

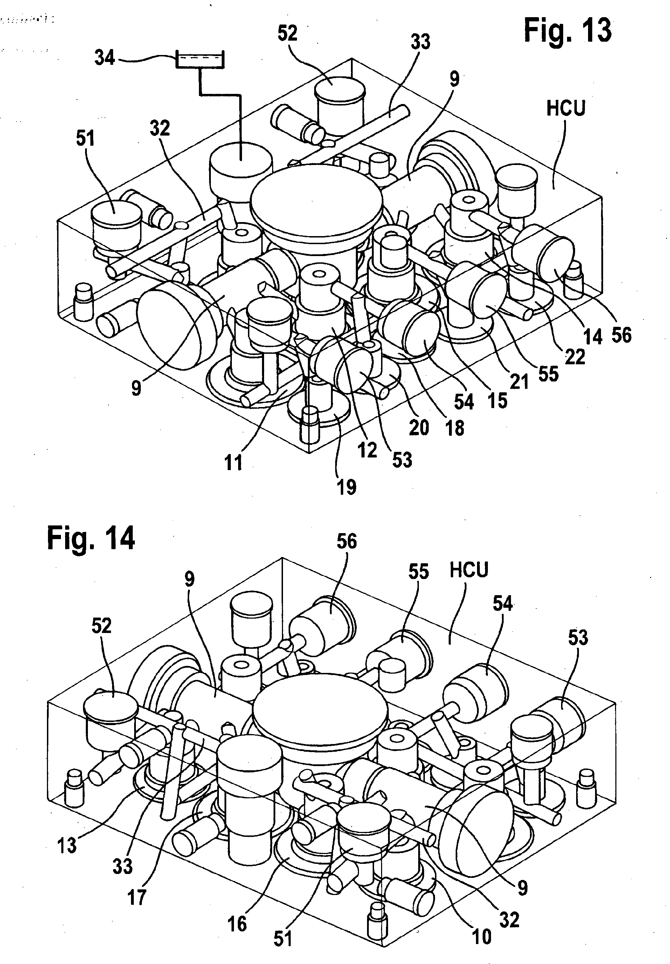

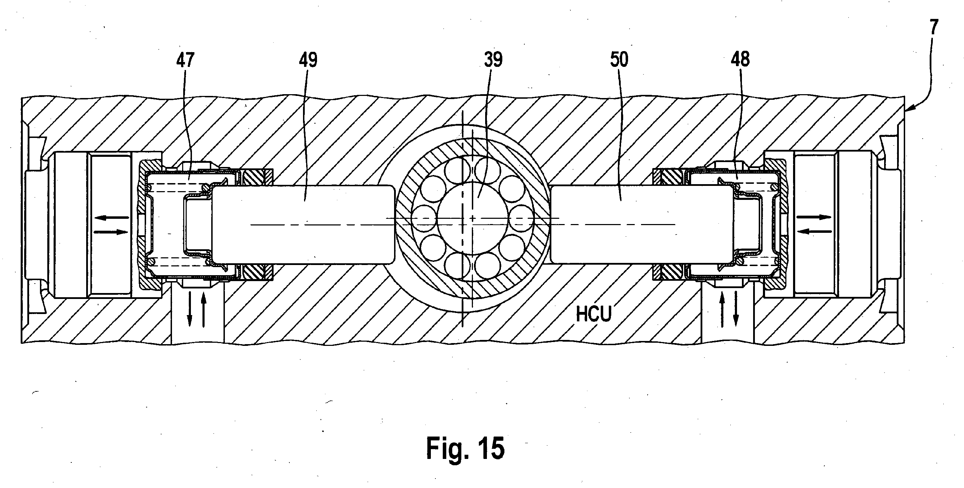

Fig. 13 und 14 verdeutlichen exemplarisch eine konkrete Verbohrung von einem Aufnahmekörper einer hydraulischen Steuereinheit HCU für eine Hochdruckpumpe 9, wie sie aus Fig. 15 detaillierter sowie im Schnitt hervorgeht, und wo-, bei jeweils mit den vorstehenden Erläuterungen übereinstimmende Bauteile und Merkmale mit identischen Bezugsziffern gekennzeichnet sind.

### Bezugszeichenliste

- 1: Regelsystem
- 2-5: Aktuator
- 6: Bremskraftverstärker
- 7: Aggregat
- 8: elektrischer Motor
- 9: Hochdruckpumpe
- 10-17: Ventil
- 18-22: Drucksensor
- 23-26: Raddrehsensor
- 27: Druckgeber
- 28: Druckkammer
- 29: Druckkammer
- 30: Leitung
- 31: Leitung
- 32: Leitungsabschnitt
- 33: Leitungsabschnitt
- 34: Behälter
- 35: Bypass
- 36: Bypass
- 37: Rückschlagventil
- 38: Rückschlagventil
- 39: Exzentertrieb
- 40: Dreh(zahl)sensor
- 41: Dreh(zahl)sensor
- 42: Sensor
- 43: Stichbohrung
- 44: Stichbohrung
- 45: Nachlaufraum
- 46: Nachlaufraum
- 47: Verdrängungsraum
- 48: Verdrängungsraum
- 49: Pumpenkolben
- 50: Pumpenkolben
- 51: Druckgeberanschluss
- 52: Druckgeberanschluss
- 53-56: Radbremsanschluss
- 57: Kolbenstange
- 58: Leitung
- 59: Leitung
- 60: Wegerfassung
- 61: Gehäuse
- 62: Platine
- 63-66: Zuleitung

- ECU: elektronische Steuereinheit
- HCU: hydraulische Steuereinheit
- R1-R4: Radbremse
- P1, P2: Verzweigungspunkt
- MMS: Mensch-Maschine-Schnittstelle
- TV: Trennventil
- EUV: elektromagnetisches Umschaltventil

## Patentansprüche

1. **Elektrohydraulisches Regelsystem (1) zur Betätigung** von wenigstens einem Aktuator (2-5) des elektrohydraulischen Regelsystems, insbesondere Kolben-Zylinderaggregat in einem Kraftfahrzeug, mit einem Aggregat (7) umfassend eine elektronische Steuereinheit (ECU), mit einem elektrischen Motor (8), der von der elektronischen Steuereinheit (ECU) angesteuert wird, umfassend eine vom Motor (8) angetriebene Hochdruckpumpe (9), umfassend einen Aufnahmekörper mit darin aufgenommenen elektrohydraulischen Ventilen (10-17) und Kanälen, zur Aufnahme der regelbaren Hochdruckpumpe (9), die über wenigstens eine hydraulische Verbindung (30,31;32,33) mit einem Druckgeber (27), insbesondere Hauptzylinder und/oder Behälter (34) verbindbar ist, und die weiterhin mit einem Druckraum von dem Aktuator (2-5), insbesondere Kolben-Zylinderaggregat, verbunden ist, wobei die elektrohydraulischen Ventile (10-17) sowie der elektrische Motor (8) mit der elektronischen Steuereinheit (ECU) vernetzt sind, **dadurch gekennzeichnet, dass** die elektrohydraulischen Ventile (10-17) wenigstens ein elektrohydraulisches Ventilpaar (10,11; 10,12; 13,14; 13,15) umfassen, das sowohl für die Ventilierung der Hochdruckpumpe (9), als auch zur Volumenstrom- und/oder Druckregelung des Aktuators (2-5) vorgesehen ist, dass die elektrohydraulischen Ventile des wenigstens einen elektrohydraulisches Ventilpaares (10,11; 10,12; 13,14; 13,15) als Saug- sowie Druckventile der Hochdruckpumpe (9) vorgesehen sind, dass die elektrohydraulischen Ventile (10-17) als Schaltventile mit einem Ventilsitz und mit einem Ventilkörper ausgebildet sind, dass die hydraulischen Verbindungen als Leitungen (30,31) und Leitungsabschnitte (32,33) ausgebildet sind, und dass die elektrohydraulische Steuereinheit (ECU) derart ausgebildet ist, dass
die in den Leitungen (30, 31) und den Leitungsabschnitten (32, 33) angeordneten elektrohydraulischen Ventile (10-17), zur Kommutierung der Hochdruckpumpe (9), wechselweise funktionell als Saugpfad oder als Druckpfad schaltbar sind.

2. Elektrohydraulisches Regelsystem nach Anspruch 1, **dadurch gekennzeichnet, dass** die elektrohydraulischen Ventile (10-17) neben einer Öffnungsstellung und einer Schließstellung wenigstens eine Teilöffnungsstellung mit verringertem Öffnungsquerschnitt aufweisen.

3. Elektrohydraulisches Regelsystem nach Anspruch 1, **dadurch gekennzeichnet, dass** elektronisch geregelte Synchronisierungsmittel vorgesehen sind, die eine elektrohydraulische Kommutierung von Saugpfad und Druckpfad von der Hochdruckpumpe ermöglichen.

4. Elektrohydraulisches Regelsystem nach Anspruch 3, **dadurch gekennzeichnet, dass** die Synchronisierungsmittel eine variable Ventilierung, insbesondere eine zueinander synchronisiert-zeitversetzte Steuerung der elektrohydraulischen Ventile (10-17) nach Art einer Phasensteuerung ermöglichen.

5. Elektrohydraulisches Regelsystem nach Anspruch 1, **gekennzeichnet durch** eine elektronische Steuereinheit (ECU) mit einer integrierten Leistungsendstufe zur modulierten Gleichstromversorgung oder zur Drehstromversorgung des elektrischen Motors (8).

6. Elektrohydraulisches Regelsystem nach Anspruch 1, **gekennzeichnet durch** eine elektronische Steuereinheit /ECU) mit einer integrierten Leistungsendstufe zur elektrischen Versorgung der elektrohydraulischen Ventile (10-17).

7. Elektrohydraulisches Regelsystem nach Anspruch 5 und 6, **dadurch gekennzeichnet, dass** Koordinierungsmittel vorgesehen sind, um zur Regelung der Hochdruckpumpe (9) eine elektronisch koordinierte Betätigung der Leistungsendstufen unter Verwendung von wenigstens einem Drucksensor (18-22) vorzusehen.

8. Elektrohydraulisches Regelsystem nach Anspruch 1, **dadurch gekennzeichnet, dass** eine elektronische Kommutierungsvorrichtung für den elektrischen Motor (8) vorgesehen ist, und dass die elektronische Kommutierungsvorrichtung in der elektronischen Steuereinheit (ECU) integriert vorgesehen ist.

9. Elektrohydraulisches Regelsystem nach Anspruch 1, **dadurch gekennzeichnet, dass** sie eine dem elektrischen Motor (8) zugeordnete Drehrichtungsumkehrvorrichtung und/oder eine Drehzahlregelungsvorrichtung und/oder eine Drehzahlerfassungsvorrichtung (40,41) umfasst.

10. Elektronisches Kraftfahrzeugregelungssystem umfassend ein elektrohydraulisches Regelsystem nach Anspruch 1, **dadurch gekennzeichnet, dass** die elektronische Steuereinheit (ECU) des hydraulischen Regelsystems (1) mit weiteren elektronischen Steuereinheiten eines Kraftfahrzeuges elektronisch vernetzt werden kann.

11. Elektrohydraulisches Regelsystem nach Anspruch 1, **dadurch gekennzeichnet, dass** das hydraulische Regelsystem (1) mit einem oder mehreren Sensoren insbesondere mit Druck- und/oder Drehsensoren (18-22; 23-26) verbunden ist, um eine automatisierte Fremdbetätigung zu ermöglichen, und dass das Aggregat (7) wenigstens eine Mensch-Maschine-Schnittstelle (MMS) und den Druckgeber (27) aufweist, um eine benutzerabhängige Betätigung zu ermöglichen.

12. Elektrohydraulisches Regelsystem nach Anspruch 1, **dadurch gekennzeichnet, dass** zwischen elektrischem Motor (8) und der Hochdruckpumpe (9) ein kinematischer Wandler, insbesondere ein Rot-Trans-Wandler vorgesehen ist.

13. Elektrohydraulisches Regelsystem nach Anspruch 1, **dadurch gekennzeichnet, dass** das Regelsystem (1) mehrere, insbesondere zwei, voneinander unabhängige Hydraulikkreise aufweist.

14. Elektrohydraulisches Regelsystem nach Anspruch 1, **dadurch gekennzeichnet, dass** die Hochdruckpumpe (9) als Verdrängerpumpe mit wenigstens einem Verdrängungsraum (47,48), wie insbesondere als Radialkolbenpumpe, ausgebildet ist.

15. Elektrohydraulisches Regelsystem nach Anspruch 11, **dadurch gekennzeichnet, dass** das elektrohydraulische Regelsystem (1) einen stromlosen fail-soft-Modus aufweist, dass der angetriebene Aktuator (2-5) in einem stromlosen fail-soft-Modus hydraulisch mit dem Druckgeber (27) verbunden ist, und dass für diese Verbindung stromlos offene Schaltventile vorgesehen sind.

16. Elektrohydraulisches Regelsystem nach Anspruch 1, **dadurch gekennzeichnet, dass** der Druckgeber (27) und/oder der Aktuator (2-5) als Anbauteil an einer hydraulischen Steuereinheit (HCU) vorgesehen ist, die ein Bestandteil des elektrohydraulischen Regelsystems ist.

17. System zur Fahrzeugstabilitätsregelung umfassend ein elektrohydraulisches Regelsystem nach Anspruch 1, **dadurch gekennzeichnet, dass** das System zur Bremsenregelung, zur Handbremsregelung, zur Lenkungsregelung, zur Niveauregelung, zur Schalt- oder Automatikgetrieberegelung, zur relativen Verstellung von Chassisbauteilen und/oder zur kombiniert-vernetzten Regelung von wenigstens zwei der vorstehend genannten Funktionen vorgesehen ist.

## Claims

1. Electrohydraulic control system (1) for the actuation of at least one actuator (2-5) of the electrohydraulic control system, in particular a piston-cylinder assembly in a motor vehicle, having an assembly (7) comprising an electronic control unit (ECU), having an electric motor (8) which is activated by the electronic control unit (ECU), comprising a high pressure pump (9) driven by the motor (8), comprising a receiving body having electrohydraulic valves (10-17) and channels received therein, for receiving the controllable high pressure pump (9) which can be connected to a pressure transducer (27) in particular a master cylinder and/or vessel (34) via a hydraulic connection (30, 31; 32, 33), and which is also connected to a pressure space of the actuator (2-5), in particular piston-cylinder assembly, wherein the electrohydraulic valves (10-17) and the electric motor (8) are networked to the electronic control unit (ECU), **characterized in that** the electrohydraulic valves (10-17) comprise at least one pair of electrohydraulic valves (10, 11; 10, 12; 13, 14; 13, 15) which are provided both for ventilating the high pressure pump (9) and for controlling the volume flow and/or pressure of the actuator (2-5), **in that** the electrohydraulic valves of the at least one pair of electrohydraulic valves (10, 11; 10, 12; 13, 14; 13, 15) are provided as intake valves and pressure valves of the high pressure pump (9), **in that** the electrohydraulic valves (10-17) are embodied as control valves with a valve seat and with a valve body, **in that** the hydraulic connections are embodied as lines (30, 31) and line sections (32, 33), and **in that** the electronic control unit (ECU) is embodied in such a way that the electrohydraulic valves (10-17) which are arranged in the lines (30, 31) and in the line sections (32, 33) for commutating the high pressure pump (9) can alternately be functionally connected as an intake path or as a pressure path.

2. Electrohydraulic control system according to Claim 1, **characterized in that** the electrohydraulic valves (10-17) have, in addition to an open position and a closed position, at least one partially open position with a reduced opening cross section.

3. Electrohydraulic control system according to Claim 1, **characterized in that** electronically controlled synchronization means are provided which permit electrohydraulic commutation of the intake path and pressure path of the high pressure pump.

4. Electrohydraulic control system according to Claim 3, **characterized in that** the synchronization means permit variable ventilation, in particular control of the electrohydraulic valves (10-17) with offset timing, synchronized with one another in the manner of a phase controller.

5. Electrohydraulic control system according to Claim 1, **characterized by** an electronic control unit (ECU) having an integrated power output stage for supplying modulated direct current or for supplying three-phase current to the electric motor (8).

6. Electrohydraulic control system according to Claim 1, **characterized by** an electronic control unit (ECU) having an integrated power output stage for supplying electricity to the electrohydraulic valves (10-17).

7. Electrohydraulic control system according to Claims 5 and 6, **characterized in that** coordination means are provided in order to provide, for the purpose of controlling the high pressure pump (9), electronically coordinated actuation of the power output stages using at least one pressure sensor (18-22).

8. Electrohydraulic control system according to Claim 1, **characterized in that** an electronic commutation device is provided for the electric motor (8), and **in that** the electronic commutation device is provided integrated into the electronic control unit (ECU).

9. Electrohydraulic control system according to Claim 1, **characterized in that** it comprises a direction of rotation reversing device and/or a rotational speed control device and/or a rotational speed sensing device (40, 41) assigned to the electric motor (8).

10. Electronic motor vehicle control system comprising an electrohydraulic control system according to Claim 1, **characterized in that** the electronic control unit (ECU) of the hydraulic control system (1) can be electronically networked to further electronic control units of a motor vehicle.

11. Electrohydraulic control system according to Claim 1, **characterized in that** the hydraulic control system (1) is connected to one or more sensors, in particular to pressure sensors and/or rotation sensors (18-22; 23-26) in order to permit automated extraneous actuation, and **in that** the assembly (7) has at least one man/machine interface (MMS) and the pressure transducer (27) in order to permit user-dependent actuation.

12. Electrohydraulic control system according to Claim 1, **characterized in that** a kinematic transducer, in particular a rot/trans transducer is provided between the electric motor (8) and the high pressure pump (9).

13. Electrohydraulic control system according to Claim 1, **characterized in that** the control system (1) has a plurality of hydraulic circuits, in particular two, which are independent of one another.

14. Electrohydraulic control system according to Claim 1, **characterized in that** the high pressure pump (9) is embodied as an expeller pump with at least one expulsion space (47, 48) such as, in particular, as a radial piston pump.

15. Electrohydraulic control system according to Claim 11, **characterized in that** the electrohydraulic control system (1) has a currentless fail soft mode, **in that** in a currentless fail soft mode the driven actuator (2-5) is connected hydraulically to the pressure transducer (27), and **in that** switching valves which are open in the currentless state are provided for this connection.

16. Electrohydraulic control system according to Claim 1, **characterized in that** the pressure transducer (27) and/or the actuator (2-5) are provided as an attachment on an hydraulic control unit (HCU) which is an integral part of the electrohydraulic control system.

17. System for controlling vehicle stability comprising an electrohydraulic control system according to Claim 1, **characterized in that** the system is provided for controlling brakes, for controlling the handbrake, for controlling steering, for controlling ride level, for controlling a manual shift transmission or automatic transmission, for relative adjustment of chassis components and/or for the combined networked control of at least two of the abovementioned functions.

## Revendications

1. Système de régulation électrohydraulique (1) pour l'actionnement d'au moins un actionneur (2-5) du système de régulation électrohydraulique, notamment un groupe cylindre-piston dans un véhicule automobile, avec un groupe (7) comprenant une unité de commande électronique (ECU), avec un moteur électrique (8) qui est commandé par l'unité de commande électronique (ECU), comprenant une pompe haute pression (9) entraînée par le moteur (8), comprenant un corps de réception avec des soupapes électrohydrauliques (10-17) et des canaux reçus dans celui-ci, pour recevoir la pompe haute pression réglable (9), qui peut être connectée par le biais d'au moins une liaison hydraulique (30, 31 ; 32, 33) à un transducteur de pression (27), en particulier un cylindre principal et/ou un récipient (34), et qui est connectée en outre à un espace de pression de l'actionneur (2-5), en particulier le groupe cylindre-piston, les soupapes électrohydrauliques (10-17) ainsi que le moteur électrique (8) étant interconnectés avec l'unité de commande électronique (ECU), **caractérisé en ce que** les soupapes électrohydrauliques (10-17) comprennent au moins une paire de soupapes électrohydrauliques (10, 11 ; 10, 12 ; 13, 14 ; 13, 15) qui est prévue à la fois pour la commande par soupape de la pompe haute pression (9) et pour la régulation du débit et/ou de la pression de l'actionneur (2-5), **en ce que** les soupapes électrohydrauliques de l'au moins une paire de soupapes électrohydrauliques (10, 11 ; 10, 12 ; 13, 14 ; 13, 15) sont prévues en tant que soupapes d'admission et soupapes de pression de la pompe haute pression (9), **en ce que** les soupapes électrohydrauliques (10-17) sont réalisées sous forme de soupapes de commutation avec un siège de soupape et un corps de soupape, **en ce que** les liaisons hydrauliques sont réalisées sous forme de conduites (30, 31) et de sections de conduites (32, 33) et **en ce que** l'unité de commande électronique (ECU) est réalisée de telle sorte que
les soupapes électrohydrauliques (10-17) disposées dans les conduites (30, 31) et les sections de conduites (32, 33), pour la commutation de la pompe haute pression (9), puissent être commutées en alternance fonctionnellement en tant que chemin d'admission ou en tant que chemin de pression.

2. Système de régulation électrohydraulique selon la revendication 1, **caractérisé en ce que** les soupapes électrohydrauliques (10-17) présentent, en plus d'une position d'ouverture et d'une position de fermeture, au moins une position d'ouverture partielle de section transversale d'ouverture réduite.

3. Système de régulation électrohydraulique selon la revendication 1, **caractérisé en ce que** des moyens de synchronisation régulés électroniquement sont prévus, lesquels permettent une commutation électrohydraulique du chemin d'admission et du chemin de pression par la pompe haute pression.

4. Système de régulation électrohydraulique selon la revendication 3, **caractérisé en ce que** les moyens de synchronisation permettent une commande par soupape variable, en particulier une commande des soupapes électrohydrauliques (10-17) synchronisée-décalée dans le temps les unes par rapport aux autres à la manière d'une commande de phase.

5. Système de régulation électrohydraulique selon la revendication 1, **caractérisé par** une unité de commande électronique (ECU) avec un étage final de puissance intégré pour l'alimentation modulée en courant continu ou pour l'alimentation en courant triphasé du moteur électrique (8).

6. Système de régulation électrohydraulique selon la revendication 1, **caractérisé par** une unité de commande électronique (ECU) avec un étage final de puissance intégré pour l'alimentation électrique des soupapes électrohydrauliques (10-17).

7. Système de régulation électrohydraulique selon la revendication 5 et la revendication 6, **caractérisé en ce que** des moyens de coordination sont prévus, afin de prévoir, pour la régulation de la pompe haute pression (9), un actionnement coordonné électroniquement des étages finaux de puissance en utilisant au moins un capteur de pression (18-22).

8. Système de régulation électrohydraulique selon la revendication 1, **caractérisé en ce qu'**un dispositif de commutation électronique est prévu pour le moteur électrique (8), et **en ce que** le dispositif de commutation électronique est prévu de manière intégrée dans l'unité de commande électronique (ECU).

9. Système de régulation électrohydraulique selon la revendication 1, **caractérisé en ce qu'**il comprend un dispositif d'inversion du sens de rotation associé au moteur électrique (8) et/ou un dispositif de régulation de régime et/ou un dispositif de détection de régime (40, 41).

10. Système de régulation électronique de véhicule automobile comprenant un système de régulation électrohydraulique selon la revendication 1, **caractérisé en ce que** l'unité de commande électronique (ECU) du système de régulation hydraulique (1) peut être interconnectée électroniquement à d'autres unités de commande électroniques d'un véhicule automobile.

11. Système de régulation électrohydraulique selon la revendication 1, **caractérisé en ce que** le système de régulation hydraulique (1) est connecté à un ou plusieurs capteurs, en particulier à des capteurs de pression et/ou de rotation (18-22 ; 23-26), afin de permettre un actionnement automatisé à distance, et **en ce que** le groupe (7) présente au moins une interface homme-machine (IHM) et le transducteur de pression (27), afin de permettre un actionnement dépendant de l'utilisateur.

12. Système de régulation électrohydraulique selon la revendication 1, **caractérisé en ce qu'**entre le moteur électrique (8) et la pompe haute pression (9) est prévu un convertisseur cinématique, en particulier un convertisseur rotation-translation.

13. Système de régulation électrohydraulique selon la revendication 1, **caractérisé en ce que** le système de régulation (1) présente plusieurs, en particulier deux, circuits hydrauliques indépendants les uns des autres.

14. Système de régulation électrohydraulique selon la revendication 1, **caractérisé en ce que** la pompe haute pression (9) est réalisée sous forme de pompe de refoulement avec au moins un espace de refoulement (47, 48), comme notamment sous forme de pompe à piston radial.

15. Système de régulation électrohydraulique selon la revendication 11, **caractérisé en ce que** le système de régulation électrohydraulique (1) présente un mode dégradé sans courant, **en ce que** l'actionneur entraîné (2-5) dans un mode dégradé sans courant est connecté hydrauliquement au transducteur de pression (27) et **en ce que** des soupapes de commutation ouvertes sans courant sont prévues pour cette connexion.

16. Système de régulation électrohydraulique selon la revendication 1, **caractérisé en ce que** le transducteur de pression (27) et/ou l'actionneur (2-5) sont prévus en tant que pièce rapportée sur une unité de commande hydraulique (HCU), qui fait partie du système de régulation électrohydraulique.

17. Système de régulation de stabilité du véhicule, comprenant un système de régulation électrohydraulique selon la revendication 1, **caractérisé en ce que** le système est prévu pour la régulation du freinage, pour la régulation du frein à main, pour la régulation de la direction, pour la régulation du niveau, pour la régulation de la boîte de vitesses manuelle ou automatique, pour le déplacement relatif de composants du châssis et/ou pour la régulation combinée-interconnectée d'au moins deux des fonctions mentionnées ci-dessus.
